# EUROPEAN PATENT APPLICATION

(11) **EP 3 663 944 A1**
(43) Date of publication of application: **10.06.2020**
(21) Application number: 18306649.7
(22) Date of filing: 07.12.2018
(51) Int. Cl.: G06F 21/32, G06F 21/60, G06K 9/00

(54) **AN ELECTRONIC DEVICE COMPRISING A MACHINE LEARNING SUBSYSTEM FOR AUTHENTICATING A USER**

(71) Applicant: Thales Dis France SA, 92190 Meudon (FR)
(72) Inventor: JACQUEMIN, Olivier, 92190 MEUDON (FR); MAUNIER, Gérald, 92190 MEUDON (FR); GOUGET, Aline, 92190 MEUDON (FR); DAO, Frederic, 92190 MEUDON (FR); PAILLART, Frédéric, 92190 MEUDON (FR)
(74) Representative: Cassagne, Philippe M.J.

(57) **Abstract**

This invention relates to an electronic device (100) adapted to be operated by a user and comprising a set of at least one sensor (108) configured to capture biometric data, a machine learning sub-system (110) needed for authenticating the user as legitimate and authorize access to at least a resource provided by the electronic device (100), the machine learning subsystem comprising a machine learning model (101), a transformation filter (107) implementing a transformation function on biometric data collected by the sensor (108), the transformation function (107) being configured using a set of at least one static parameter (106) specific to the electronic device (100) so that the transformation function implemented by the electronic device (100) is different than the one implemented by a another electronic device of the same type.

## Description

### TECHNICAL FIELD

The present invention relates to an an electronic device comprising a machine learning subsystem for authenticating a user and is applicable to the domain of machine learning based authentication.

### BACKGROUND OF THE INVENTION

Inference based Machine Learning (ML) models are increasingly used to secure to access to electronic devices, such as portable wireless communication devices.

A set of one or several sensors can be embedded in the electronic device for collecting data related to the device's owner. A current trend is to use data collected by sensors as input data to feed a machine learning system and generate a machine learning model adapted to authenticate the genuine device's owner.

For that purpose, a learning phase is set up for the machine learning model MLM to learn how to recognize a specific user, for example the owner of the electronic device or a person allowed to use it or to use an embedded application. Once trained, the machine learning model can be used to authenticate this specific user and in case of successful authentication, authorize access to some restricted services or information.

One problem to be solved for securing this type of machine learning system is to protect the machine learning model from theft. This problem can be addressed using classical cryptographic techniques with the objective of mitigating the risk for hackers to steal the model, for example with a copy-paste of one or several unprotected files containing the machine learning model. Indeed, a hacker may want to use the machine learning model somewhere else out of its associated electronic device or by another application running on this device for fraudulent purposes.

If a machine learning model is extracted fraudulently from a given electronic device, using for example a malicious application, the hacker can use the stolen model in different ways.

The hacker can use the stolen machine learning model MLM to carry out brute force attacks with the aim of identifying a fake data leading to a successful authentication. Then, the hacker will be able to authenticate as the legitimate user of the electronic device and access sensitive information or restricted services. For that purpose, the hacker can conduct an attack using a malware for stealing the machine learning models and then hundreds of pictures for brute forcing the stolen machine learning models.

The hacker can also use a stolen machine learning model MLM in another electronic device he controls with the aim to access restricted services that are relying on authentication or identification methods based on this model and submit known victim's face pictures. An example of application that can be targeted with this attack is a bank application using embedded machine learning systems.

The hacker can also install the stolen machine learning model in another electronic device that is not linked to the victim or even to the model application domain. For example attacker can install the stolen machine learning model used usually for phone authentication and highly trained by the victim in a "killer" drone targeting the victim.

There is therefore a need for a technology allowing to protect a machine learning model from being used outside of the electronic device for which it was designed.

### SUMMARY OF THE INVENTION

This invention related to an electronic device adapted to be operated by a user and comprising a set of at least one sensor configured to capture biometric data, a machine learning sub-system needed for authenticating the user as legitimate and authorize access to at least a resource provided by the electronic device, the machine learning subsystem comprising a machine learning model, a transformation filter implementing a transformation function on biometric data collected by the sensor, the transformation function being configured using a set of at least one static parameter specific to the electronic device so that the transformation function implemented by the electronic device is different than the one implemented by a another electronic device of the same type.

According to an example, the machine learning model is trained thanks to a machine learning trainer using biometric data captured by the at least one sensor after and which has been transformed by the filter.

According to an example, the set of at least one sensor is a combination of one or several of the following sensors: a digital camera, a microphone, a gyroscope and an accelerometer.

According to an example, the set of sensors comprises a plurality of sensors and a plurality of transformation filters which are implemented such that one transformation filters is associated to one sensors.

According to an example, at least one sensor is adapted to capture a picture representative of biometric data, a pre-function being applied before the transformation function implemented by the transformation filter in order to identify one or several reference points in the captured picture.

According to an example, the picture is a face picture, the machine learning subsystem being adapted to enable authentication based on facial recognition and the pre-function being adapted to identify facial landmark in the face picture as the reference points.

According to an example, the transformation function is adapted to modify one of several features in the image among: the spacing of the eyes, the width and/or the length of the bridge of the nose, the shape of the lips, the size of the ears and/or chin.

According to an example, the picture is a fingerprint picture, the machine learning subsystem being adapted to enable authentication based on fingerprint detection and the pre-function being adapted to identify minutiae in the fingerprint picture as the reference points.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 provides an example where a machine learning model is bound to an electronic device thanks to a filter implementing a transformation function;
- Figure 2 illustrates the operation of a machine learning sub-system implemented in an electronic device during a learning phase;
- Figure 3 illustrates the operation of a machine learning sub-system implemented in an electronic device during an inference phase;
- Figure 4 provides example of transformations applied on a face picture by a transformation function;
- Figure 5 provides example of transformations applied on a fingerprint picture by a transformation function.

### DETAILED DESCRIPTION

One purpose of the technology for which several embodiments are described hereafter is to bind a machine learning modem to a given electronic device or to an application running on an electronic device.

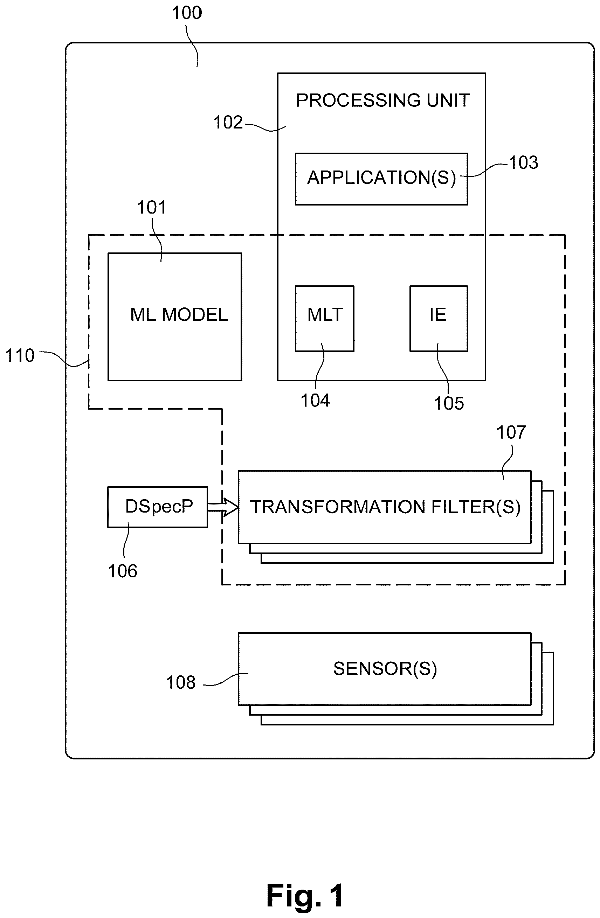

**Figure** 1 provides an example where a machine learning model is bound to an electronic device thanks to a filter implementing a transformation function.

In this figure, the electronic device 100 is described as a combination of functional components. A functional component correspond for example to a component implemented in hardware or in software, or with a combination of both. Further, the skilled person will understand that several functional components can be implemented in a single physical component and that a given functional component can be implemented using several modules implemented in a several different physical components.

The anti-cloning properties of the machine learning model 101 implemented in an electronic device 100 is enabled by taking into account a set of at least one static parameter that is specific to this device 100 or to a specific application running on this device 100. The at least one parameter is said static because once provisioned in the electronic device, for example during manufacturing, is considered as permanently allocated.

The electronic device 100 comprises a set of one or several sensors 108 configured to collect data.

A sensor is a functional module adapted to respond to a physical stimulus and transmit a response signal for measurement or processing purpose.

The set of at least one sensor 108 can be a combination of one or several of the following sensors that are provided there for exemplary purpose: a digital camera, a microphone, a gyroscope and an accelerometer. Those skilled in the art will understand that other types of sensors can also be advantageously used in the context of this invention.

The electronic device 100 also comprises a set of at least one filter 107 implementing a transformation function on data collected by the set of at least one sensor 108. Such a filter is designated in the sequel as a transformation filter. In the context of this invention, the word filter designates a functional component configured for modifying one or several input signals taking into account one or several parameters in order to provide one of several output signals.

According to an embodiment, the transformation filter 107 can be integrated into a physical component implementing one or several sensors.

The transformation filter 107 can be software implemented, implemented in a hardware component or a combination of both.

As an example, the transformation filter 107 can be implemented as a hardware accelerator. It can then be integrated on a printed circuit board (PCB) or in a System-on-Chip (SoC) that is part of the electronic device's architecture.

According to an important aspect of the invention, the transformation filter 107 is configured for it to be device specific. In other words, the transformation that is applied by the one or several filters on data collected by the one or several sensors is different from one device to the other. For that purpose, the transformation filter 107 uses at least one static parameter that is device specific.

When a more than one sensor are implemented in the electronic device 100, a plurality of transformation filters can be implemented such that each of these transformation filters is associated to each of the sensors. In that case, the set of transformation filters 107 comprises a plurality of transformation filters, each of them being associated to a different sensor. In that case, the transformation filters are adapted to be device specific and sensor specific.

A set of at least one device specific parameter 106 is used to render the transformation function implemented by the transformation filter 107 specific to the electronic device 100.

Different types of device specific parameters can be used. For example, a device identifier such as an International Mobile Identification number (IMEI) can be used for that purpose.

Other examples of device specific parameters are:
- the media access control (MAC) address of the device;
- a device signature;
- a security certificate of the operating system implemented in the electronic device;
- a footprint of a processing unit implemented in the electronic device.

According to another example, the transformation filter 107 can also be a physical device such as an optical lens and in that case, the static device specific parameter can be a physical parameter of the lens such as described in the article from Fei Sun, Bin Zheng, Hongsheng Chen, Wei Jiang, Shuwei Guo, Yichao Liu, Yungui Ma, Sailing He entitled "Transformation Optics: From Classic Theory and Applications to its New Branches", October 2, 2017, Laser and Photonics Review.

The transformation function can be advantageously diversified in premises during manufacturing using the device specific static parameters of later during a configuration operation of the electronic device.

The electronic device 100 also comprises an inference engine 105. The inference engine can be defined as a set of inference rules applicable to a machine learning model 101 acting as a knowledge base. The aim of applying these rules is to deduce new information, and in this particular example, to provide the result of an authentication initiated by a user requesting access to the electronic device 100 or requesting to execute one or several applications 103 embedded by the electronic device 100.

The machine learning model 101 is a functional component aiming as memorizing complex structured and unstructured information allowing the inference engine 105 to recognize data coming from the set if at least one sensor 108 as being provided by a user that is allowed to access to the electronic device or to an application embedded in the electronic device 100.

It is to be noticed that the inference model 105, the machine learning model 101 and the set of one or several filters 108 are part of a machine learning subsystem 110 implemented in the electronic device 100.

The electronic subsystem 110 can be designed in order to be unsupervised, semi-supervised or supervised. If semi-supervised or supervised, the machine learning subsystem 110 also needs an optional functional component designated as the machine learning trainer 104 in this description. This functional component 104 is adapted to enable the training of the machine learning model 101.

Biometrics are used to identify and authenticate a person using a set of recognizable and verifiable data unique and specific to that person.

For example, in the case of facial biometrics, a 2D or 3D sensor captures a face. It then transforms it into digital data by applying an algorithm, before comparing the image captured to those held in a database. This is a faithful and augmented replica of the process at work in the human brain.

These automated systems can be used to identify or check the identity of individuals in just a few seconds based on their facial features: for example spacing of the eyes, bridge of the nose, contour of the lips, ears and/or chin.

Other biometric signatures can also be considered in the context of this invention: fingerprints, iris scans, voice recognition, digitization of veins in the palm of the hand and behavioral measurements.

The machine learning subsystem enables authentication using biometric data captured by the one or several sensors 108. Multimodal authentication technics can therefore be implemented by the electronic device 100, for example combining face recognition with fingerprint authentication and/or vein recognition.

A processing unit 102 is also represented as comprising the three functional components 103, 104, 105. This processing unit can be a Central Processing Unit (CPU), a Tensor Processing Unit (TPU), a graphics processing unit (GPU), a System-on-Chip (SoC) or other type of processing unit. The processing unit 102 is provided here for exemplary purpose only and it can comprise other combinations of functional components.

According to this example, the processing unit 102 embeds one or several applications 103 requiring the user of the electronic device to be authenticated. For example, the electronic device embeds a banking application providing services needing a user authentication based on facial recognition. The described technology can for example advantageously be used to secure online payments in an environment where cybercrime has proliferated in recent years.

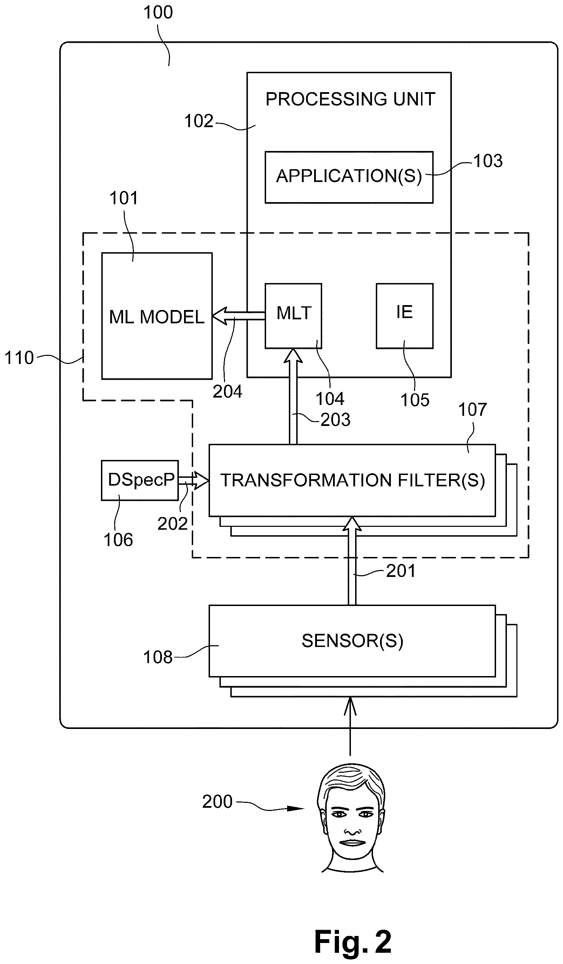

**Figure 2** illustrates the operation of a machine learning sub-system implemented in an electronic device during a learning phase.

References 100-110 are referring to functional components or entities similar to those described with Figure 1 using the same references.

According to the example depicted in Figure 2, the machine learning sub-system is supervised, and the machine learning model need therefore to be trained. The authentication is based on face recognition and the sensor 108 is a digital camera. During the learning phase, a legitimate user presents several times its face 200 to the sensor 108. The sensor provides 201 an input signal to the transformation filter 107. The transformation filter 107 is tuned using the device specific static parameters 106. The transformation applied is therefore specific to this particular electronic device 100. The output signal generated by the transformation filter 107 is provided 203 to the machine learning trainer 104 which is configured to train 204 the machine learning model 101. For this embodiment, one important aspect is that the machine learning model 101 is trained based on input data which are transformed using the device specific transformation filter 107. This means that if the same model is used during the inference phase with captured data that is filtered differently or not filtered at all, the machine learning sub-system will not be able to correctly authenticate the user that should normally be considered as legitimate. Said differently, the device specific filtering operation allows to bind the machine learning model to a particular electronic device. The machine learning model cannot anymore be cloned, even if it is stored in an unsecure memory area of the electronic device.

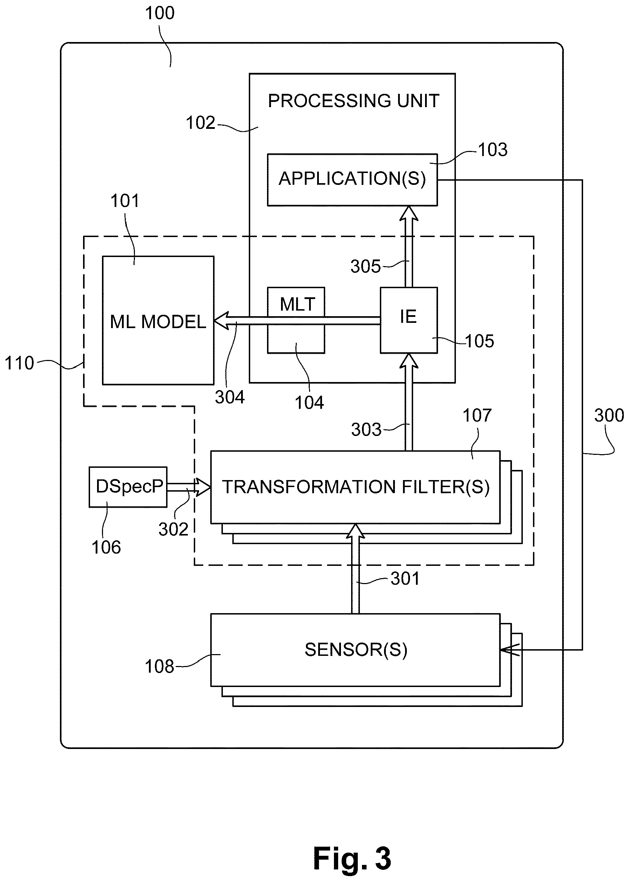

**Figure 3** illustrates the operation of a machine learning sub-system implemented in an electronic device during an inference phase.

When considering a supervised or semi-supervised machine learning subsystem, once the machine learning has been trained during the learning phase, an inference phase allows to verify the a given user requesting access to the electronic device 100 or to use an application 103 embedded in the electronic device is authentic.

In Figure 3, references 100-110 are referring to functional components or entities similar to those described with Figure 1 using the same references.

In this example, the machine learning subsystem 110 aims at protecting the use of one or several applications 103 embedded in the electronic device 100.

First, a user requests using the one or several applications 103. This triggers the authentication process. This user is then requested to present his face to a digital camera 108 that provides an input signal 301 to the transformation filter 107. The transformation filter is configured 302 using the one or several device specific static parameters 106. The input signal is transformed into an output signal 303 that is provided to the inference engine 105 conducting the authentication process using 304 the machine learning model 101 that has been previously trained using input data transformed using the same device specific transformation function. If the user is legitimate to use the one or several applications 103, he will be allowed to do so. If not, the access to the one or several applications is barred.

With the same scenario using the same machine learning model 101 but extracted from a first electronic device and then installed in a second electronic, the same user will be unable to authenticate successfully as the device specific transformation function is different.

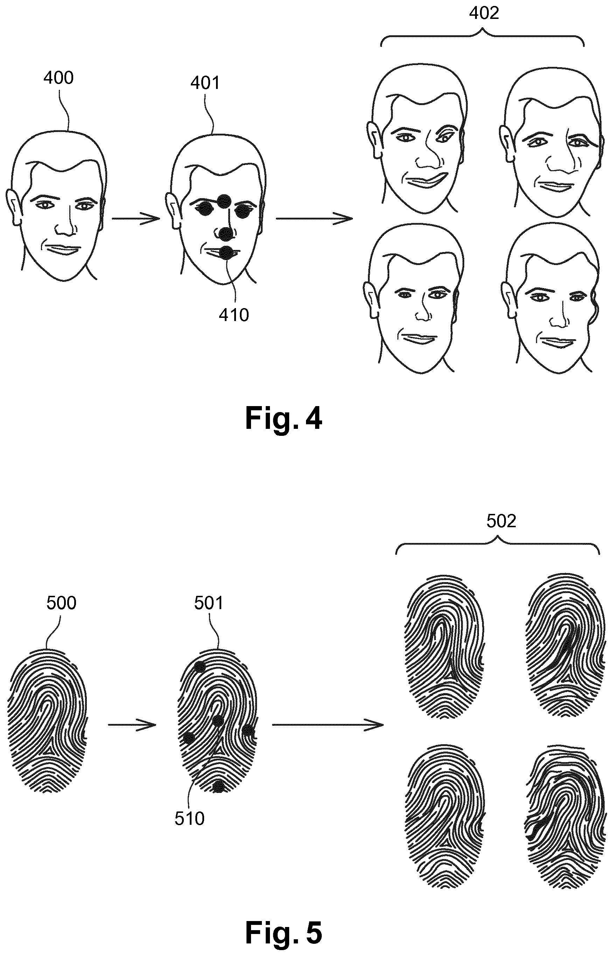

**Figure 4** provides example of transformations applied on a face picture by a transformation function.

According to a particular embodiment, a first function is applied and aims at identifying references points in a picture. In case of a transformation function applied on a face picture 400, those reference points are landmarks 401. Existing facial landmarks detection technics can advantageously be used for that purpose, such as those described in the article written by Yue Wu and Qiang Ji, entitled "Facial Landmark Detection: a Literature Survey", International Journal on Computer Vision, May 2018.

Then, a second function is applied taking the landmarks as an input. In case of facial recognition, this second function can be adapted to modify one of several of these features in the image: the spacing of the eyes, the width and/or the length of the bridge of the nose, the shape of the lips, the size of the ears and/or chin. According to this example, this second function is the transformation function and is configured using the device specific static parameters. Four modified pictures 402 are provided as an example of what could be generated by four different electronic devices for the same input picture 400.

**Figure 5** provides example of transformations applied on a fingerprint picture by a transformation function.

According to a particular embodiment, a first function is applied. The first function aims as identifying references points 501 in the fingerprint picture 500. In case of a transformation function applied on a fingerprint picture, those reference points are minutiae. Existing minutiae detection technics can advantageously be used for that purpose, such as those described in the article written by Roli Bansal, Priti Sehgal and Punam Bedi, entitled "Minutiae Extraction from Fingerprint Images - a Review", International Journal of Computer Science Issues, Vol. 8, Issue 5, No 3, September 2011.

Then, a second function, which is the transformation function, is applied taking the minutiae as an input. In case of fingerprint detection, this second function can be adapted in order to modify one of several of areas of the fingerprint around one or several minutiae. For example, one area can be twisted, a simple loop can be transformed into a double loop or an arch can be artificially introduced.

According to this example, this is the second function is configured using the device specific static parameters. Four modified fingerprints 502 are provided as an example of what could be generated by four different electronic devices for the same input fingerprint picture 500.

The proposed technology is based on the use of a filter implementing a transformation function. The binding of the machine learning model MLM to the electronic device is performed thanks to this transformation function which is device dependent. Using this technology, the machine learning model MLM is non-clonable and more resistant to brute force attacks and reverse engineering. It is therefore possible to correctly use the machine learning model MLM only if it is executed on the electronic device for which it was designed or by the expected application on this electronic device.

## Claims

1. An electronic device (100) adapted to be operated by a user and comprising a set of at least one sensor (108) configured to capture biometric data, a machine learning sub-system (110) needed for authenticating the user as legitimate and authorize access to at least a resource provided by the electronic device (100), the machine learning subsystem comprising a machine learning model (101), a transformation filter (107) implementing a transformation function on biometric data collected by the sensor (108), the transformation function (107) being configured using a set of at least one static parameter (106) specific to the electronic device (100) so that the transformation function implemented by the electronic device (100) is different than the one implemented by a another electronic device of the same type.

2. The electronic device (100) according to Claim 1, wherein the machine learning model (101) is trained thanks to a machine learning trainer (104) using biometric data captured by the at least one sensor (108) after and which has been transformed by the filter (107).

3. The electronic device (100) according to any of the preceding claims, wherein the set of at least one sensor (108) is a combination of one or several of the following sensors: a digital camera, a microphone, a gyroscope and an accelerometer.

4. The electronic device (100) according to any of the preceding claims, wherein the set of sensors (108) comprises a plurality of sensors and a plurality of transformation filters (107) which are implemented such that one transformation filters (107) is associated to one sensors.

5. The electronic device (100) according to any of the preceding claims, wherein at least one sensor is adapted to capture a picture representative of biometric data, a pre-function being applied before the transformation function implemented by the transformation filter (107) in order to identify one or several reference points in the captured picture.

6. The electronic device (100) according to claim 5, wherein the picture is a face picture, the machine learning subsystem (110) being adapted to enable authentication based on facial recognition and the pre-function being adapted to identify facial landmark in the face picture as the reference points.

7. The electronic device (100) according to claim 6, wherein the transformation function is adapted to modify one of several features in the image among: the spacing of the eyes, the width and/or the length of the bridge of the nose, the shape of the lips, the size of the ears and/or chin.

8. The electronic device (100) according to claim 5, wherein the picture is a fingerprint picture, the machine learning subsystem (110) being adapted to enable authentication based on fingerprint detection and the pre-function being adapted to identify minutiae in the fingerprint picture as the reference points.
